# EUROPEAN PATENT APPLICATION

(11) **EP 1 659 370 A2**
(43) Date of publication of application: **24.05.2006**
(21) Application number: 05025076.0
(22) Date of filing: 16.11.2005
(51) Int. Cl.: G01C 21/36

(54) **Navigation system, display changeover method and program, and display device**

(30) Priority: 17.11.2004 JP 2004333356
(71) Applicant: AISIN AW CO., LTD., Anjo-shi, Aichi 444-1192 (JP)
(72) Inventor: Shinato, Akihiro, Okazaki-shi Aichi 444-8564 (JP)
(74) Representative: Kramer - Barske - Schmidtchen

(57) **Abstract**

Navigation systems, display changeover methods and programs, and display devices display an image, detect a turn amount and a turn direction, and scroll the displayed image based on the detected turn amount and the detected turn direction. The navigation systems, display changeover methods and programs, and display devices determine whether the detected turn amount is at least a predetermined turn amount in one direction within a preset period and continuously scroll the displayed image in the detected turn direction when the detected turn amount is at least the predetermined turn amount in the one direction within the preset period.

## Description

The disclosure of Japanese Patent Application No. 2004-333356 filed on November 17, 2004, including the specification, drawings and abstract, is incorporated herein by reference in its entirety.

Related technical fields include navigation systems, display changeover methods and programs, and display devices.

Conventional navigation systems display in a scrolling fashion a map screen on a display through operation of an input portion such as a dial that can be rotatably operated. For example, the rotating direction or press -down operation, of a rotary switch in a navigation system, described in Japanese Patent Application Publication No. JP-A-2002-132248, enables switching between a scroll-display mode and a normal mode, as well as the setting of a scrolling direction.

In the navigation system described above, however; scrolling the screen requires continuous operation of the input portion until a desired position is reached. For example, a navigation system equipped with a dial has a problem with operability in that the dial must be continuously turned until a desired position is shown on the display. This problem with operability becomes more serious if a driver of the vehicle is operating the navigation system, because the operation needs to be easily performed in a short time so that the driver is not distracted from driving. Other possible methods for continuous scrolling (scrolling in a relatively continuous manner at a relatively constant speed), without having to continuously operate the input portion include pressing a switch for that purpose, or selecting, for example, "Continuous Scroll" from a menu screen. However, such methods require additional switches or reduced the ease of operability due to a more complicated operation method. Furthermore, users may forget to select the "Continuous Scroll" operation.

In view of at least one or more of the foregoing issues, it is beneficial to provide a navigation system that may increase the ease of operability of continuous-scroll-displaying, as well as provide on more of a navigation system a display changeover method and program, and/or a display device.

Various exemplary implementations of the broad principles described herein provide navigation systems, display changeover methods and programs, and display devices that may display an image, may detect a turn amount and a turn direction, and may scroll the displayed image based on the detected turn amount and the detected turn direction. The navigation systems, display changeover methods and programs, and display devices may determine whether the detected turn amount is at least a predetermined turn amount in one direction within a preset period and may continuously scroll the displayed image in the detected turn direction when the detected turn amount is at least the predetermined turn amount in the one direction within the preset period.

Exemplary implementations will now be described with reference to the accompanying drawings, wherein:

FIG.1 shows a front view of an exemplary navigation system;

FIG. 2 shows a functional block diagram of the exemplary navigation system;

FIG. 3 shows an exemplary display method;

FIG. 4 shows an exemplary display;

FIG. 5 shows an exemplary display; and

FIG. 6 shows an exemplary display.

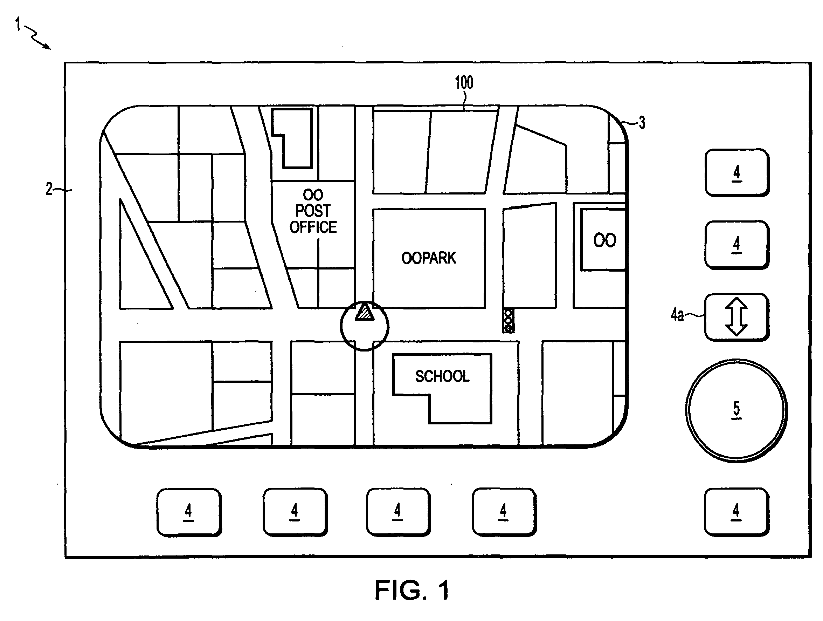

FIG. 1 shows a front view of an exemplary display device According to this example, a navigation system 1 will be described as the display device. However, any device capable of display in a scrolling fashion may be used as the display device.

As shown in FIG. 1, the navigation system 1 may include a case 2 and/or a display 3, for example, fixed thereto. The navigation system 1 may also include, for example, switches 4 and/or an operating portion 5, for example, provided on the case 2 to be operated in a rotatable fashion. The switches 4 may serve as, for example, an input portion for mode selection, present location/destination input, and/or volume adjustment. The operating portion 5 may serve as, for example, an input portion for scrolling a map screen 100 shown on the display 3.

For example, to show the right side of an image (such as the map screen 100 as shown in FIG. 1) the operating portion 5 may be turned in a clockwise direction. To show the left side of the image, for example, the operating portion 5 may be turned in a counter-clockwise direction. For showing the top side of the image, for example, a switch 4a for up-down scroll-displaying among the switches 4 may be pressed, and then the operating portion 5 may be turned in the clockwise direction. For showing the bottom side of the image, for example, the operating portion 5 may be turned in the counter-clockwise direction after pressing the switch 4a.

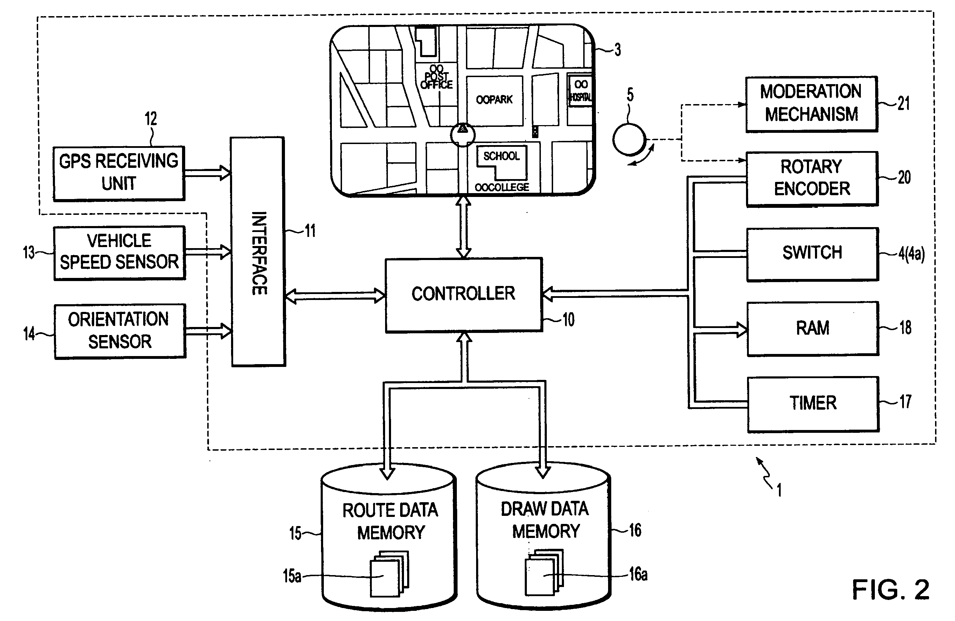

Next, an exemplary configuration of the navigation system 1 will be described with reference to FIG. 2. As shown in FIG. 2, the navigation system 1 may physically, functionally, and/or conceptually include, for example, a controller 10, for example, that may detect a turn, control the display, make various determinations, and/or a control the continuous display; an interface (1/F) 11; and/or a GPS receiving unit 12. The GPS receiving unit 12 may receive waveforms from a GPS satellite, and the controller 10 may receive data from the GPS receiving unit 12, for example, via the interface 11. Such data may include, for example the latitude, longitude, and/or altitude of the present location, as well as a current time and date. Furthermore, the controller 10 may, for example, receive data from a veh icie speed sensor 13 and/or an orientation sensor 14 via the interface 11. Such data may include, for example, the orientation of the navigation system 1 and/or a relative distance from a particular point, such as a departure point. Based on data from th e GPS receiving unit 12, data from the vehicle speed sensor 13, and/or data from the orientation sensor 14, the controller 10 may calculate the navigation system's position and thus the position of a vehicle containing the navigation system 1.

In addition, a route data memory 15 and a draw data memory 16 may be included in the navigation system 1, for example, as an optical disk inserted in a disk drive (not shown), from which the controller 10 may read out route data 15a and/or draw data 16a, respectively. As route data 15a, node data and link data may be stored corresponding to roads in areas defined based upon longitude and latitude. Route data 15a for adjacent areas may be mutually associated. Using the route data 15a, the controller 10 may, for example, calculate the optimal guide route from the present location to a destination.

According to this example, the term "link" refers to, for example, a road or portion of a road. For example, according to one type of road data, each road may consist of a plurality of componential units called links. Each link may be separated and defined by, for example, an intersection, an intersection having more than three roads, a curve, and/or a point at which the road type changes. As used herein the term "node" refers to a point connecting two links. A node may be, for example, an intersection, an intersection having more than three roads, a curve, and/or a point at which th e road type changes.

Draw data 16a stored in the draw data memory 16 may include, for example, background data for drawing roads and/or facilities, as well as character data for displaying, for example, facility names. In addition, the draw data 16a may be separated according to each area, similar to the route data 15a. Draw data 16a for adjacent areas may also be mutually associated. If set to route guidance mode, the controller 10 may read out the draw data 16a corresponding to the guide route calculated using the route data 15a. After connecting the draw data 16a, the controller 10 may create map draw data. The created map draw data may be temporarily stored, for example, in a RAM 18. The controller 10 may then reads out data from among the map draw data that is within a predetermined distance from the host vehicle position. The controller 10 may display the host vehicle position and guide route, for example, on the display 3 over the readout map draw data.

The navigation system 1 may also include, for example, a rotary encoder 20 that forms a rotation detecting mechanism. The rotary encoder 20 may be operably connected to the operating portion 5 provided in the case 2. Thus, for example, if the operating portion 5 is turned, the rotary encoder 20 may generate a pulse signal. By counting the number of pulse signals, the controller 10 may calculate the amount of rotation of the operating portion 5. The turn direction, for example, may also be calculated by the phase of the pulse signals.

A moderation mechanism 21 may also be operably connected to the operating portion 5. The moderation mechanism 21 may, for ex ample, provide an audible and/or tactile indication of the rotation (e.g., clicks), thereby evoking a precise turn feeling each time the operating portion 5 is turned a certain amount. An quantified amount the operating portion 5 may be turned (hereinafte referred to as "one step") to generate one experience of the precise turn feeling (e.g., one click) may lead the rotary encoder 20 to, for example, generate a predetermined number (whole number) of pulse signals.

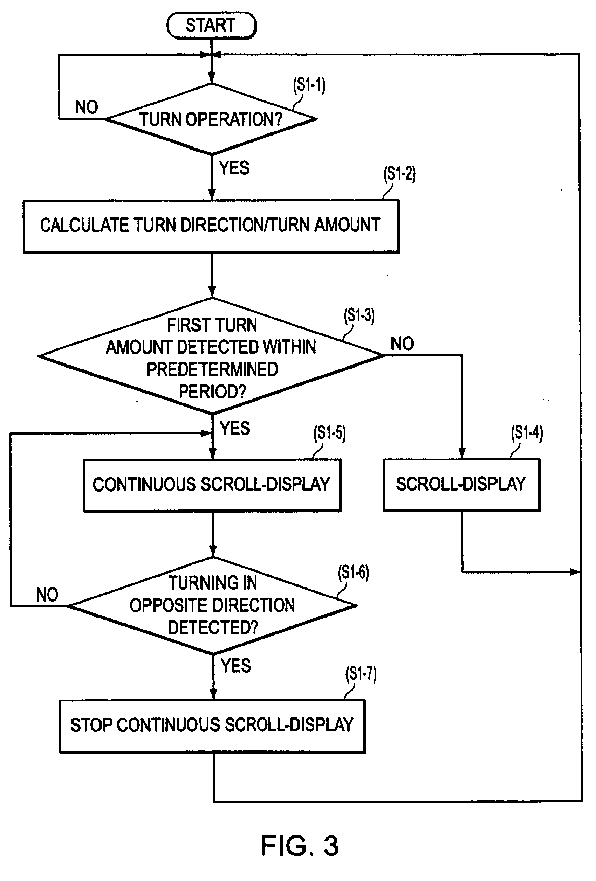

Next, an exemplary display method will be described with reference to FIG. 3. The exemplary method may be implemented, for example, by one or more components of the above-descnbed navigation system 1. However, even though the exemplary structure of the above descried navigation system may be referenced in the description, it should be appreciated that the referenced structure is exemplary and the exemplary method need not be limited by any of the above-descnbed exemplary structure.

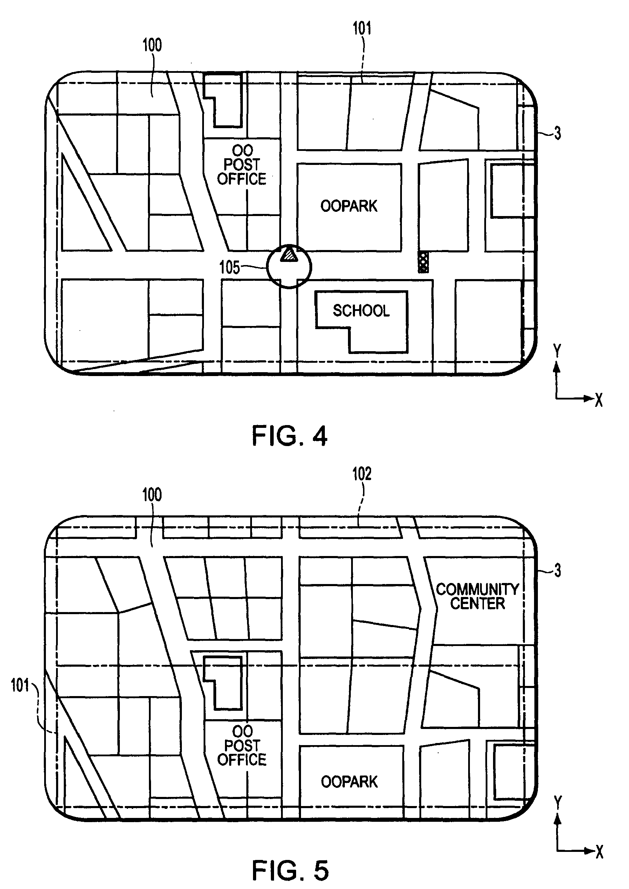

First, drawing data is obtained. For example, the controller 10 may extract drawing data 16a from the draw memory 16, with such drawing data 16a, for example, also including data within a preset distance of the host vehicle position. Next, map draw data is created. For example, after connecting the extracted draw data 16a, the controller 10 may create map draw data. The created map draw data may be, for example, temporarily stored in the RAM 18. Then, display area data is output. For example, the controller 10 may output as a display area data from among the map draw data that is within a predetermined distance of the host vehicle position. The display area may be updated as the host vehicle moves. For example, the controller 10 may repeat one or more of the preceding steps to change and output the display area of the map draw data in accordance with movement of the host vehicle position. In such cases, for example, the controller 10 may display a positional mark 105 (se e FIG. 4), which indicates the host vehicle location and route to the destination, over the map when setting to the route guidance mode is detected.

As shown in FIG. 3, it is repeatedly determined whether a turning operation is detected (step S1-1). For example, the controller 10 may repeatedly determine whether the operating portion 5 has been turned. If there is a turning operation (step S1 -1 = Yes), for example, if the controller 10 receives a pulse signal from the rotary encoder 20, then a turn amount and/or direction are calculated (step S1-2). For example, the controller 10 may calculate the turn direction of the operating portion 5 and the amount turned. Specifically, for example, the controller 10 may count the pulse signals generated by the rotary encoder 20 to calculate the turn amount, and may determine the turn direction, for example, based upon the phase of the pulse signals.

Next, it is determined whether a first turn amount was detected within a predetermined period (step S1-3). For example, the controller 10 may use a timer 17 to determine whether the calculated turn amount (step S1-2) is equal to or more than the first turn amount within the predetermined period. The predetermined period may be set, for example, to 1.5 seconds, and a predetermined turn amount set as three steps of the moderation mechanism 21. If a first turn amount was not detected in the predetermined period (step S1 -3 = No), normal scrolling is performed (step S1-4). For example, if the controller 10 determines that the first turn amount was not detected within the predetermined period, normal -scroll-displaying may be performed That is, the controller 10 may move the display area of map draw data stored in the RAM 18 in accordance with the turn direction of the operating portion 5 for a distance corresponding to the amount turned. For example, the controller 10 may determine that the operating portion 5 has been turned in the clockwise direction after receiving a signal from a switch 4a for moving the map in the up-down direction. In such a case, the controller 10 may calculate an amount to shift the display area of the map draw data upward. Display data of the map draw data is thus moved farther upward than the present display area by only the calculated shift amount, and the display area data is output to the display 3. Accordingly, the screen shown on the display 3 is scroll-displayed upward by an amount corresponding to the turn amount of the operating portion 5. The exemplary method then returns to step S1-1.

If it is determined that the first turn amount was detected in the predetermined period (step S1-3 = Yes), continuous-scroll-displaying is performed (step S1-5). For example, a user may continuously turn the operating portion 5 in the navigation system 1 a relatively large and fast amount to show a position quite far from the present display area on the display 3. When such an operation is performed, the navigation system 1 may automatically change over to continuous-scroll-display.

At this time, the controller 10 may move the present display area of the map draw data stored in the RAM 18 at a preset speed in the calculated turn direction. For example, the controller 10 may receives a signal from the switch 4a to move the screen in the up-down direction. In such a.situation, if it is determined that the operating portio n 5 has been turned in the clockwise direction, the controller 10 may move the display area of the map draw data upward at a certain speed even, if operation of the operating portion 5 stops thereafter. Accordingly, for example, a display area 101 shown on the display 3 in FIG. 4 may be succeeded by a display area 102 above the display area 101 (in the y-axis direction of FIG. 4) shown on the display 3 in FIG. 5, such that a lower area of the display area 101 (in a direction opposite the y-axis direction) in FIG. 4 is no longer shown on the display 3.

In this manner, the controller 10 may move the display area of the map draw data to achieve a continuous scroll-display on the display 3 that moves the display area in the up-down direction at a preset speed. If it is determined that the operating portion has been turned in the counter-clockwise direction, continuous-scroll-displaying may be performed to move the display area downward.

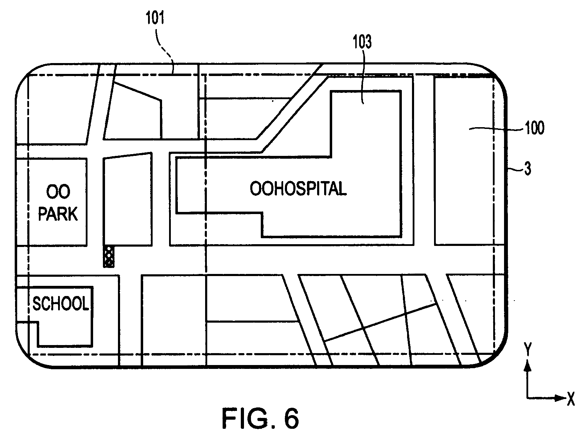

On the other hand, it may be determined that the operating portion 5 has been turned in the clockwise direction, without a signal being received from the switch 4a mentioned above by the controller 10. In such a case, the display area 101 shown in FIG. 4 may be succeeded by the display of a display area 103 to the right (in the x-axis direction of FIG. 4) of the display area 101, as shown in FIG. 6. If the controller 10 receives a signal from the switch 4a, and furthermore, determines that the operating portion 5 has been turned in the counter-clockwise direction, continuous-scroll-displaying may be performed to move the display area leftward (in the x-axis direction of FIG. 4).

While the continuous-scroll-display is performed, it may be determined whether turning in the opposite direction has been detected (step S1-6). For example, the controller 10 may check whether a pulse signal has been received from the rotary encoder 20. If received, the controller 10 calculates the turn direction, and determines whether the turn direction calculated in step S1 -2 is an opposite direction.

If it is determined that turning in the opposite direction has been detected (step S1-6 = Yes), the continuous-scroll-display is stopped (step S1-7). Consequently, for example, the map screen 100 shown on the display 3 may also be stopped. Operation of the method then returns to step S1-1 and may repeat the process described above. Alternatively, if it is determined that turning in the opposite direction has not been detected (step S1-6 = No), continuous-scroll-displaying may be continued (step S1-5) while also checking for turning in the opposite direction (step S1-6).

According to the above examples, the navigation system 1 and/or exemplary method may automatically change to the continuous -scroll-display if, for example, the operating portion 5 used for scroll -display is turned according to a predetermined condition. Accordingly, there is no need for the user to carry out complicated operations such as selecting a mode from a menu screen. Therefore, the navigation system 1 can be easily operated in a short time. Furthermore, the method for changing over to the continuous scroll is made easier to remember, so that even if the user does not particularly remember the operation method, he or she can perform the continuous scroll. Accordingly, the operability of the navigation system 1 can be increased, thereby lightening the operation burden on users such as the driver.

According to the above examples, if it is determined that the operating portion 5 has been turned in the opposite direction while continuous scroll-display is being performed, the controller 10 is designed to stop the continuous scroll -display. Therefore, the user can stop the scroll-display with a simple operation.

According to the above examples, using a connection between the operating portion 5 and the rotary encoder 20, as well as pulse signals from the rotary encoder 20, the controller 10 may calculate the turn amount and the turn direction. This consequently increases the detection accuracy of the turn amount and the turn direction, and can also achieve a system size reduction.

According to the above examples, the moderation mechanism 21 is provided so as to generate a moderation of one step each time the operating portion 5 is turned a certain amount. When the operating portion 5 is turned, for example, a total of three steps, the screen of the display 3 may show a continuous scroll-display. Therefore, the operability of the operating portion 5 is increased. In addition, the user may also estimate how much turning is needed to change over to continuous scrolling, which makes the operation method easy to remember.

While various features have been described in conjunction with the examples outlined above, various alternatives, modifications, variations, and/or improvements of those features and/or examples may be possible. Accordingly, the examples, as set forth abov, are intended to be illustrative. Various changes may be made without departing from the broad spirit and scope of the underlying principles.

For example, in the above examples, the predetermined period may be set as 1.5 seconds and the first turn amount may be set to three steps However, other periods and turn amounts may be set. Furthermore, for example, in step S1 -3 (turning at least equal to the first turn amount within the predetermined period) may be a condition in which turning equal to or more than a predetermined turn amount (first turn amount) within the predetermined period is repeated at least a predetermined number of times: For example, if it is determined in step S1-3 that at least three steps worth of turning was repeated three times or more within the predetermined period, then continuous scroll-displaying may be performed. In other words, during times when the operating portion 5 is turned, for example, three times and such a turning operation is intermittent, the continuous -scroll-display may be performed if turning equal to or more than a predetermined turn amount is detected at least a predetermined number of times within a predetermined period.

According to the above examples, while the continuous scroll-display is being performed, the controller 10 may be designed to detect turning of the operating portion 5 in the opposite direction, and stop the continuous scroll-display (step. S1-7) when a second turn amount is detected (step S1-6 = Yes). In this step, the second turn amount may be preset as equal to one step, for example.

The moderation mechanism 21 may be omitted. This in turn achieves a more simple navigation system 1. In this case as well, the continuous scroll-display may be performed when the operating portion 5 is turned only a predetermined turn amount.

In the above examples, the route data memory 15 and the draw data memory 16 may be stored on an optical disk inserted in a disk drive. However, a hard disk provided in the navigation system 1 may also be used to store the memories 15, 16. Furthermore, the GPS receiving unit 12 may be omitted, and the navigation system 1 may be formed such that data is received from a GPS receiving mechanism provided separately in the vehicle. The navigation system 1 may also be provided with either the vehicle speed sensor 13 or the orientation sensor 14.

Finally, it should be appreciated that, the method for performing continuous scrolling that depends upon the turn direction and turn amount of the operating portion 5 may be applied to any other display devices that are capable of displaying in a scrolling manner.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A navigation system (1) comprising:
a display (3) that displays an image;
an input mechanism (5) that is tumably operated;
a turn detector (20) that detects a turn amount and a turn direction of the input mechanism; and
a controller (10) that:
scrolls the displayed image based on the detected turn amount and the detected turn direction;
determines whether the detected turn amount is at least a predetermined turn amount in one direction within a first preset period; and
continuously, scrolls the displayed image based on the detected turn direction when it is determined that the detected turn amount is at least the predetermined turn amount in the one direction within the first preset period.

2. The navigation system according to claim 1, wherein the controller:
continuously scrolls the displayed image when it is determined the that the input mechanism has been turned at least the predetermined turn amount at least a predetermined number of times within a second preset period.

3. The navigation system according to claim 1 or 2, wherein the controller:
stops continuously scrollirig the displayed image if the turn detector detects that the input mechanism has been turned in another direction while continuously scrolling the displayed image.

4. The navigation system according to claim 3, wherein the controller:
stops continuously scrolling the displayed image if the turn detector detects that the input mechanism has been turned at least a second turn amount in another direction.

5. The navigation system according to any one of claims 1 to 4, wherein:
the turn detector comprises a rotary encoder that is operatively connected to the input mechanism; and
the turn detector detects the turn amount and the turn direction of the input mechanism based upon a signal from the rotary encoder.

6. The navigation system according to any one of claims 1 to 5, wherein:
the input mechanism comprises a moderation mechanism driven by a turning of the input mechanism; the moderation mechanism provides an audible or tactile indication of the turning of the input mechanism; and
the predetermined turn amount is a turn amount that generates a predetermined number of indications by the moderation mechanism.

7. A display changeover method that changes a display mode of a display, comprising:
displaying an image;
detecting a turn amount and a first turn direction;
scrolling the displayed image based on the detected turn amount and the detected first turn direction;
determining whether the detected turn amount is at least a predetermined turn amount in one direction within a preset period; and
continuously scrolling the displayed image in the detected first turn direction when the detected turn amount is at least the predetermined turn amount in the one direction within the preset period.

8. The method of claim 7, further comprising:
scrolling the image based on the detected turn amount and the detected first turn direction, when the detected turn amount is less than the predetermined turn amount in the one direction within the preset period.

9. The method of claim 7, further comprising:
detecting a second turn amount and a second turn direction;
stopping continuously scrolling the displayed image if the second detected turn direction is not equal to the first detected turn direction.
